# EUROPEAN PATENT APPLICATION

(11) **EP 1 680 958 A1**
(43) Date of publication of application: **19.07.2006**
(21) Application number: 06250253.9
(22) Date of filing: 18.01.2006
(51) Int. Cl.: A01K 39/012

(54) **Bird feeder accessory**

(30) Priority: 18.01.2005 GB 0500940
(71) Applicant: C J Wildbird Foods Limited, Shrewsbury SY4 4UR (GB)
(72) Inventor: Nock, Robert Kenneth, Mellieha (MT)
(74) Representative: Barnfather, Karl Jon

(57) **Abstract**

A supplementary bird food storage apparatus (10); for use with known tubular bird feeders; the apparatus comprising a storage vessel (12), for storing bird food, having at least a first tapered portion (14); means of connecting and holding in place the first tapered portion within the main body top portion (B) of said tubular bird feeder such that substantially prevents egress of bird food at the connection means.

## Description

### BACKGROUND OF THE INVENTION

The present invention relates to bird feeding equipment and in particular to a supplementary bird food storage vessel and to a bird feeder having such a vessel.

Wild bird feeders typically comprise a cylindrical main body in which bird food is stored; the main body having means for dispensing stored feed to birds, often to birds resting on a perch and feeding through an aperture in a side wall of the main body. Users often find that such bird feeders have to be replenished with bird food at very frequent intervals. This can be a inconvenient.

### BRIEF SUMMARY OF THE INVENTION

An object of the present invention is to provide a supplementary bird food storage vessel and in particular such a vessel that can be attached to a large size range of existing bird feeders. A further object is to provide a bird feeder having a supplementary bird food storage vessel that may be securely attached to an existing bird feeder.

In one aspect the invention comprises a supplementary bird food storage apparatus; for use with a bird feeder, said bird feeder having a main tubular body; the apparatus comprising a storage vessel, for storing bird food, having at least a first tapered portion; securing means configured to engage both said bird feeder main tubular body and said storage vessel and so secure said first tapered portion of apparatus within said main tubular body of a bird feeder and thereby provide a seal between said first tapered portion of the apparatus and said main tubular body such that external egress of bird food at the joint between between said food storage vessel and the main body of the bird feeder is substantially prevented.

Preferably, (in use) the wall of the first tapered portion is inclined at an angle α to the horizontal where α is in the range 25° to 50°, and more preferably in the range 30° to 45°. This range provides satisfactory downflow of bird food in use and also allows has advantages in relation to the securing means (see below). Preferably this tapered portion is frustro-conical shaped; this assists self-centering of the apparatus in a tubular bird feeder body.

Preferably the apparatus comprises a tubular outlet attached to or depending from the underside of said first tapered portion, to facilitate flow and distribution of feed to said main tubular body.

Preferably a further tubular portion surrounds the tubular outlet; attached to or depending from the underside of said first tapered portion or the main storage vessel above. In use, this advantageously helps keep the bird food dry by minimising moisture ingress resulting from rain etc.. Preferably, the tubular outlet and further tubular portion are positioned concentrically.

The securing means may comprise a rod configured so as to engage diametrically opposed holes within said main tubular body. One or both of the tubular outlet and further tubular portion may have slots positioned to allow said rod to pass the walls thereof in use. The apparatus may comprise a ring or tube with a plurality of radially extending arms that depend from an inner wall of the food storage vessel and a threaded member that engages both said rod and said ring or tube with radially extending arms. These features form part of the securing means. In a further embodiment of the invention comprises a resilient member that provides bias between said securing means rod and the storage vessel of the apparatus.

The storage vessel may comprise a second tapered portion wherein much of the bird food is stored said second tapered portion taking the form of a funnel comprising either an inner wall with no discontinuity and/or a plurality of mutually inclined planar inner wall surfaces. Preferably, this portion of the storage vessel is frustro-conical shaped. Alternatively, this portion may be funnel shaped or have a generally hemispherical shape. The angle of taper of the second tapered portion may be in the range 25° to 75°.

The securing means may comprise one or more resilient members; for example, a helical spring attached at one end to an external surface of a main bird feeder tubular body and attached at the other end to the storage vessel of the apparatus.

### BRIEF DESCRIPTION OF THE DRAWINGS

The apparatus will now be described by reference to the following diagrammatic drawings in which:
Figure 1 is a sectioned side view of a first embodiment of apparatus according to the invention attached to the top of (two) known tubular bird feeders;
Figure 2 is an enlarged portion of part of Figure 1;
Figure 3 is a side view of apparatus according to a first embodiment of the invention;
Figure 4 is an end view of the apparatus of Figure 3;
Figure 5 is an underside view of the apparatus of Figure 3;
Figure 6 is a plan view of the apparatus of Figure 3; and
Figure 7 shows another embodiment of the invention having a lid (squirrel baffle).

### DETAILED DESCRIPTION OF THE INVENTION

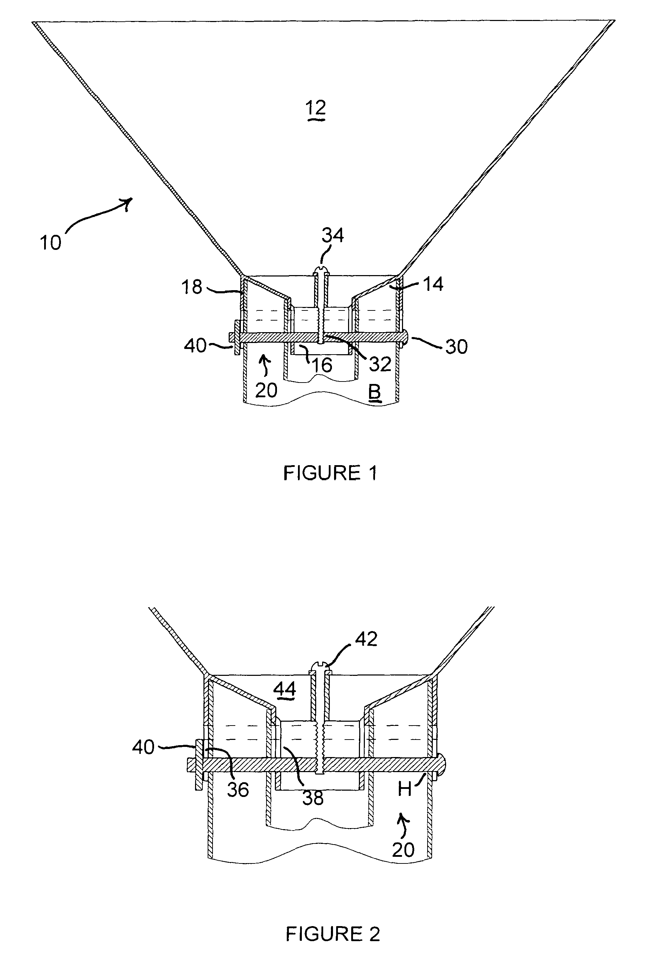

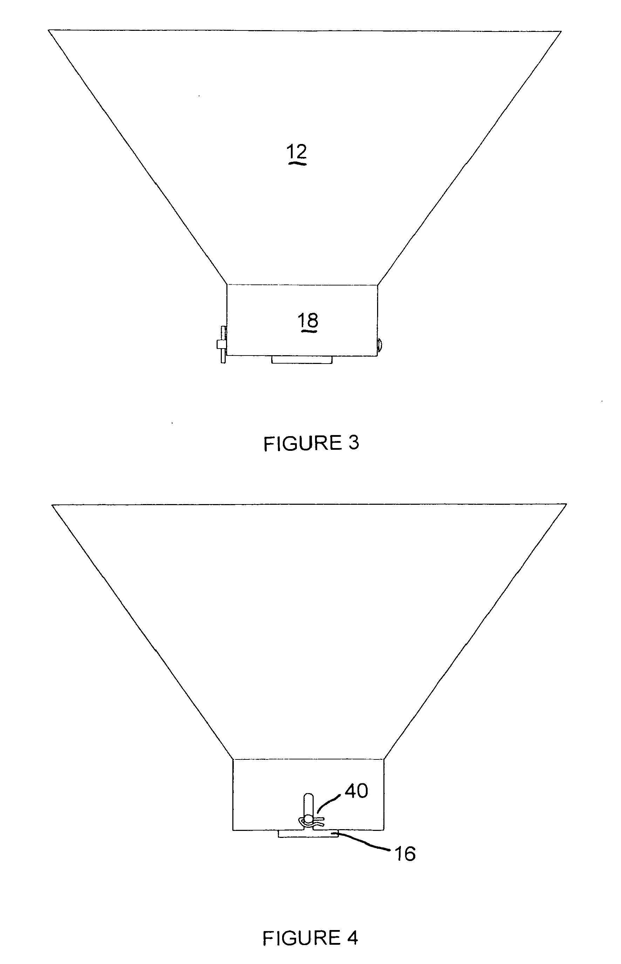

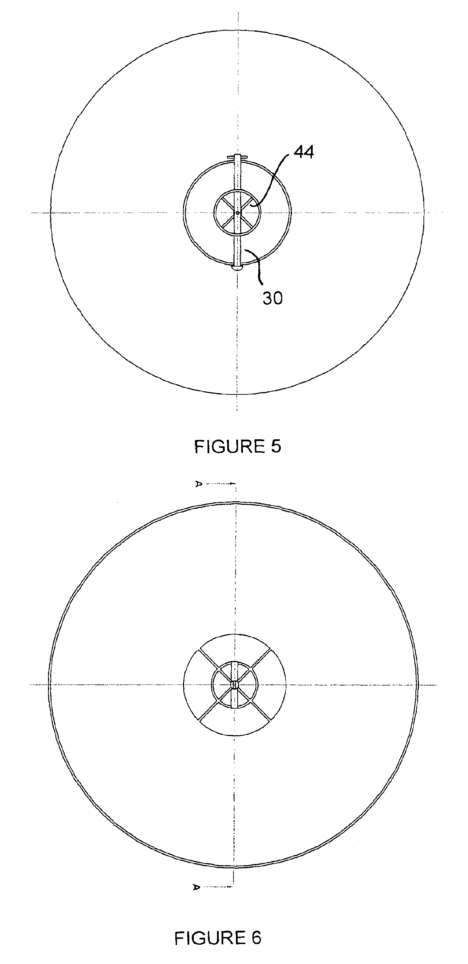

Referring to Figures 1 to 6; the bird food storage apparatus 10 comprises a main food storage portion 12; preferably frustro-conically shaped so that in use bird food is directed by gravity into a lower adjoining first tapered portion 14; again preferably frustroconically shaped. Main food storage portion 12 and first tapered portion 14 are preferably integrally formed. The (lower) outlet of first tapered portion 14 directs bird food (by gravity) via adjoining tubular outlet 16 into the top part B of a known tubular bird feeder. Depending from below the lower surface of tapered cone portion 14 is a further tubular portion 18 of larger diameter than tubular outlet 16, and arranged concentrically therewith so as to present an annular space 20 between the outer wall of the tubular outlet 16 and the inner wall of further tubular portion 18; said annular space being open at the lower end to allow the introduction of known bird feeders of different diameter; but closed at the top end. Thus, in use the top of a known bird feeder body (cover removed) abuts against that part of the lower face of first tapered section 18 that lies within annular space 20. This feature allows the apparatus to be fitted to known bird feeders of continuously varying diameter; in this case of diameters larger than the outer diameter of tubular outlet 16 and smaller than the inner diameter of further tubular portion 18.

The frustro-conical ceiling of space 20 also means that when the apparatus is placed in a suitable diameter known bird feeder that it "self-centres". Known bird feeders normally have a pair of diametrically opposed holes H near the top end of the main tubular body; provided in order to insert a rod from which the known bird feeder may hang. If any such rod is removed then holes H can advantageously be used to locate part of the securing means of the present invention.

The securing means may take various forms; for example it may comprise two or more springs arranged to bias the apparatus within the top of the known bird feeder so as to prevent accidental detachment or intended detachment by a rodent such as a squirrel. In one embodiment the securing means is a helical spring attached at one end to hole H and at the other end to an external eye or hook (not shown) attached to or formed as part of the external surface of the main storage portion 12 or the outer face of the further tubular portion 18.

Preferably the securing means comprises a rod, bolt or bail 30 with a threaded central hole 32 dimensioned to engage a bolt or screw 34. In use, rod 30 passes through holes H in the main bird feeder body B, through slots 36 and 38 in tubular portion 18 and tubular outlet 16 respectively, being secured by a circlip, nut or the like 40 (see Figure 2).

The discontinuity in upper part of tubular outlet 16 is provided to allow easier manufacture when using plastics material.

In use, bolt 34 passes through tubular sleeve 42; this sleeve being attached to the inner walls of the apparatus 10 by means of a plurality of radially extending arms or walls. Thus, in the present embodiment four radially extending walls 44 that are mutually perpendicular secure sleeve 42 to the inner walls of the first tapered portion 14. Planar walls 44 extend vertically from a point near the junction of the main food storage portion 12 with the first tapered section 14 to a point near the lower outlet of the first tapered portion. The sleeve 42, and arms or walls 44 are preferably integrally formed with the main storage vessel but may be attached to an insert (not shown) configured to engage the inside of the apparatus; for example a frustro-conically shaped insert member.

The main food storage portion 12 is preferably frusto-conically shaped with an upper diameter in the range 150 to 300 mm and a lower diameter of 50 to 150 mm. The diameter of tubular outlet 16 is preferably 25 to 50 mm. The apparatus is preferably made of a rigid plastics material.

The provision of the first tapered portion 14, rod 30, bolt 34, sleeve 42 and arms 44 provide a securing means that in use is adjustable so that the apparatus can be attached to a wide range of different sized tubular bird feeders. As the apparatus self-centres in the selected bird feeder the distance between the top of the sleeve 42 and the threaded central hole 32 varies according to the diameter of the known bird feeder main body. This variation is accommodated by screwing bolt 34 into thread 32 so that the apparatus is held firmly , in slight tension, within the existing bird feeder main body. This assists in providing sealing engagement of the apparatus with a known bird feeder. In use, elongate slots 36, 38 allow rod 30 to move slightly in a vertical direction in order to be at the correct position to firmly hold the apparatus under said slight tension.

Further tubular portion 18 is a preferable feature as it ensures that rain etc. that runs down the outside of main food storage portion 12 does not enter the top of the bird feeder but rather drains from the lower edge of said further tubular portion.

Tubular outlet 16 also assists distribution of bird food stored in the apparatus 10 to a level below that of the securing means. This advantageously prevents any egress of bird food through slots 36 and 38.

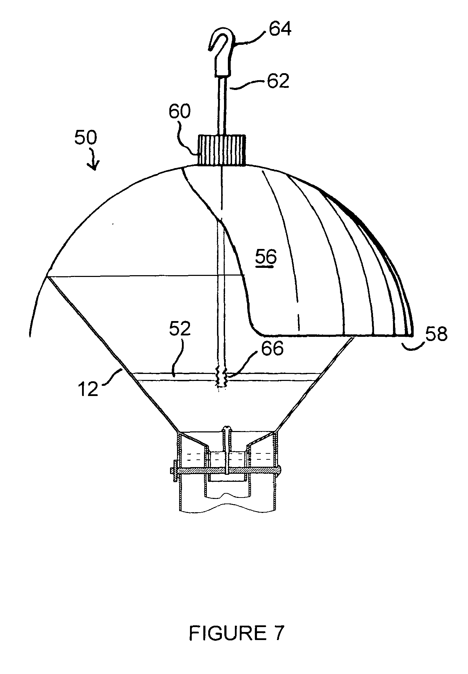

Figure 7 shows a further embodiment of the invention; where the main food storage vessel has a lid 50 (squirrel baffle). In this case, the main food storage portion 12 has a cross member; preferably a rod 52 or the like attached to an internal wall of the main food storage portion 12. Lid 50 comprises a hemi-spherical shell 56 with a rim 58, and a collar 60 located equidistantly from rim 58. Collar 60 is adapted to receive hanging rod 62 having a hook 64 at the upper end and is threaded at the lower end such that in use it may engage a corresponding female threaded bore 66 located at the midpoint of rod 52. Collar 60 comprises an adjustable collet. In use collar 60 may be loosened so that shell 56 can be drawn upwardly along the hanging rod towards hook 64 so allowing access to the main food storage vessel. Preferably rod 52 is pivotally mounted to the main food storage portion 12. This allows the shell 56 (following above described upward adjustment) to be tilted sidewardly to allow substantially unrestricted access to the main food storage portion 12; for cleaning and food replenishment.

## Claims

1. A supplementary bird food storage apparatus; for use with a bird feeder, said bird feeder having a main tubular body; the apparatus comprising a storage vessel, for storing bird food, having at least a first tapered portion; securing means configured to engage both said bird feeder main tubular body and said storage vessel and so secure said first tapered portion of apparatus within said main tubular body of a bird feeder and thereby provide a seal between said first tapered portion of the apparatus and said main tubular body such that external egress of bird food at the joint between between said food storage vessel and the main body of the bird feeder is substantially prevented.

2. Apparatus according to Claim 1 wherein, in use, the wall of the first tapered portion is inclined at an angle α to the horizontal where α is in the range 25° and 50°, and preferably in the range 30° and 45°.

3. Apparatus according any preceding claim wherein the first tapered portion is frustro-conical shaped such that in use it self-centres in the top of said bird feeder main tubular body.

4. Apparatus according to any preceding claim comprising a tubular outlet attached to or depending from the underside of said first tapered portion, to facilitate flow and distribution of feed to said main tubular body.

5. Apparatus according to Claim 4 comprising a further tubular portion surrounding said tubular outlet, and attached to or depending from the underside of said first tapered portion or the main storage vessel above.

6. Apparatus according to Claim 5 wherein the tubular outlet and further tubular portion are positioned concentrically.

7. Apparatus according to any preceding claim wherein the securing means comprise a rod configured so as to engage diametrically opposed holes within said main tubular body.

8. Apparatus according to Claim 7 as dependent upon Claim 4 or 5 wherein one or both of the tubular outlet and further tubular portion have slots positioned to allow said rod to pass the walls thereof in use.

9. Apparatus according to any preceding claim wherein the securing means comprises a sleeve or tube with a plurality of radially extending arms that depend from an inner wall of the food storage vessel.

10. Apparatus according to Claim 9 as dependent on Claim 7 wherein, in use the securing means further comprises a threaded member that engages both said rod and said sleeve or tube with radially extending arms.

11. Apparatus according to Claim 7 or 8 comprising a resilient member that provides bias between said rod and the storage vessel of the apparatus.

12. Apparatus according to any preceding claim wherein the storage vessel comprises a main storage portion that is funnel-shaped, frustro-conical shaped, generally hemispherically shaped, or the shape of a truncated pyramid.

13. Apparatus according to any preceding claim wherein the storage vessel comprises a second tapered portion wherein much of the bird food is stored said second tapered portion taking the form of a funnel comprising an inner wall with a plurality of mutually inclined planar inner wall surfaces.

14. Apparatus according to any preceding claim 1 wherein the securing means comprise one or more resilient members.
